# EUROPEAN PATENT SPECIFICATION

(11) **EP 2 512 629 B1**
(45) Date of publication and mention of the grant of the patent: **02.08.2017**
(21) Application number: 10803129.5
(22) Date of filing: 17.12.2010
(51) Int. Cl.: B01D 53/14

(54) **REGENERATION OF AN ABSORPTION SOLUTION**
REGENERATION EINER ABSORPTIONSLÖSUNG
RÉGÉNÉRATION D'UNE SOLUTION ABSORBANTE

(30) Priority: 18.12.2009 GB 0922140
(43) Date of publication of application: 24.10.2012
(73) Proprietor: Doosan Babcock Limited, Crawley, Sussex RH10 9AD (GB)
(72) Inventor: HUME, Scott, Alexander, Strathclyde PA4 8DJ (GB); KUCZYNSKA, Agnieszka Magdalena, Strathclyde PA4 8DJ (GB)
(74) Representative: Wilson, Peter
(86) International application number: PCT/GB2010/052124
(87) International publication number: WO 2011/073671

(56) References cited:
- WO-A1-2007/012143
- DE-A1- 3 627 777
- US-A- 5 344 627
- US-A1- 2007 028 774
- US-A1- 2008 056 972
- K.S. Fisher: "Integrating MEA regeneration with CO2 compression to reduce co2 capture costs" In: "Fourth Annual Conference on Carbon Capture and Sequestration", 2005, Conference Proceedings, May 2-5, 2005

## Description

The invention relates to a method and apparatus for the regeneration of a capture medium comprising aqueous amine solution of the type used in an industrial process for the removal of carbon dioxide from a gas phase by absorption/ adsorption and like processes. The invention for example relates to the regeneration of a medium comprising aqueous amine solution used for the removal and capture of carbon dioxide from a gas phase through a solution absorption and regeneration processes. The invention relates particularly to the regeneration of absorption solution during the regeneration process. The invention is particularly suitable for application in an aqueous absorption and regeneration system for removing CO₂ from the flue gases of thermal power plants fired by carbonaceous fossil fuels, both as new build and for retrofitting into existing capture systems.

Most of the energy used in the world today is derived from the combustion of fossil fuels, such as coal, oil, and natural gas. Post-combustion carbon capture (PCC) is a means of mitigating the effects of fossil fuel combustion emissions by capturing CO₂ from large sources of emission such as thermal power plants which use fossil fuel combustion as the power source. The CO₂ is not vented to atmosphere but is removed from flue gases by a suitable absorber and stored away from the atmosphere. Other industrial processes where similar principles might be applicable to capture post-process CO₂ might include removal of CO₂ generated in a process cycle, for example removal of CO₂ from the process flow during production of ammonia, removal of CO₂ from a natural gas supply etc.

It is known that CO₂ can be separated from a gas phase, for example being the flue gas of a thermal power plant, by means of absorption by passing the gas through a column where the gas flows in an opposite direction to a capture medium in the form of an absorbent in liquid phase, typically in aqueous solution. Such a process is sometimes referred to as wet scrubbing. A well known absorbent reagent comprises one or more amines in water.

Gas is passed through the absorption solution under conditions of pressure and temperature optimised for removal of substantially all the carbon dioxide into the absorption solution. The purified gas emerges at the top of the absorption column and is then directed for further processing as necessary. The absorption solution rich in CO₂ is drawn off at the foot of the absorption column and subjected to a stripping process to remove the CO₂ and regenerate the absorption solution.

To effect this the CO₂ rich solution is passed onwards to a suitable apparatus for recovery of the gas and regeneration of the solution. Typically this process involves regenerative heating of the solution, for example through successive cycles of reheating and for example by means of a reboiler. The CO₂ rich solution is for example introduced into a regeneration column, and maintained at high temperature, which may be at or near boiling point under pressure. The heat necessary for the reboiler is typically obtained when the system is used in association with a thermal power plant by supplying the reboiler with a proportion of the steam from the LP turbine system. At higher temperatures the solution will release the absorbed CO₂. Regenerated solution may be drawn off for reuse in the absorption column. Vapour containing the stripped CO₂ and also typically comprising water vapour and solvent vapour emerges at the top of the regeneration column and is passed through a condenser system which condenses the vapour and returns the liquids to the regeneration column. The released CO₂ may then be collected for example for sequestration.

Solid media may also be considered where appropriate to the application where a target gas is selectively adsorbed/ absorbed by a solid phase capture medium, whether formed as an active species on passive carrier or via a solid that is directly active. Some carbon capture systems based on amine or similar chemistry stabilise an active sorbent on solid carriers instead of in solution. Solid adsorbent capture systems based on the use of cyclic adsorption/ desorption processes with immoblised amines or other CO₂-binding materials held on solid supports such as activated carbons, zeolites or other fine tailored alumina, silica, zirconia or their combinations are seen as a possible next generation carbon capture technology. Generally similar principles are likely to be applied to the regeneration of such solid capture media.

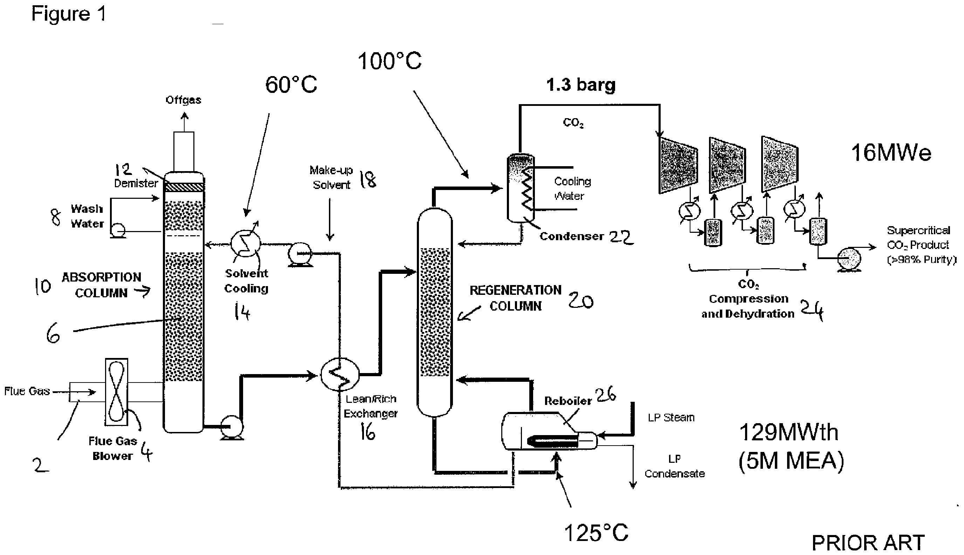

A schematic of a known absorption and recovery apparatus as above described is shown in Figure 1.

Other known absorption and recovery apparatus are shown in US5344627 and DE3627777.

US5344627 describes a process for removing carbon dioxide from a combustion exhaust gas by absorption with a CO2-absorbing liquid, and regenerating the CO2-absorbing liquid by a CO2-absorbing liquid regeneration column with a reboiler. There is a CO2 compression system for liquefying the removed CO2 by compression and cooling, storing the CO2, A part of steam discharged from the high pressure turbine of the boiler is used to drive turbines for compressors that compress the CO2, and steam discharged from the compressor turbines is supplied as a heating source to the reboiler for the regeneration of the CO2-absorbing liquid. An additional vapour recompression system is not provided.

DE3627777 describes a process for regenerating a loaded absorbent in a regeneration column and stripping an acid gas therefrom. Condensing heating means are used to heat and regenerate solution in the column. Stripped condensate is drawn from the bottom. Vapour is drawn from the top. A heat exchanger and separator condense and separate out this residual stripping vapour which to the column. The gas is delivered for onward processing. A compressor acts on the vapour phase before it is passed to the separator and delivers compressed vapour via the condensing heating means as a source of heat therefor.

A problem with the existing absorption and recovery process described above is that it can be very energy intensive. The energy requirement arises in large part because of the heat required for the reboiler. In application on a thermal power plant, the required reboiler heat can reduce net power production by as much as 15% or more.

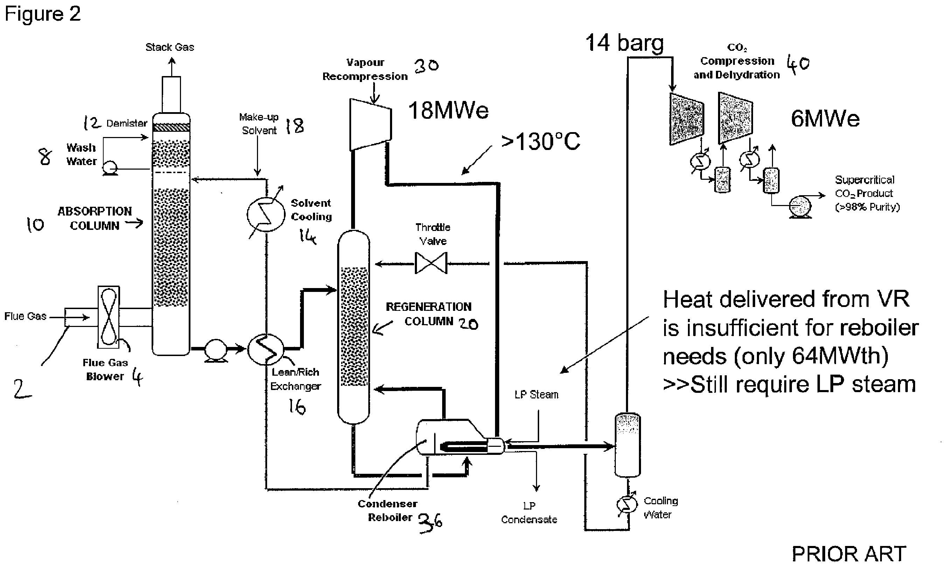

It is known to improve the energy efficiency of the process by making use of vapour recompression to recover useful heat from the vapour/ CO₂ stream. The vapour/ CO₂ stream from the regeneration column is compressed and then used to provide heat for the reboiler. A schematic of an absorption and recovery apparatus incorporating such a modification is shown in Figure 2.

An example of a prior art regeneration apparatus with such a system of vapour recompression to recover useful heat is shown in Fisher et al, "Integrating MEA Regeneration with CO2 Compression to Reduce CO2 capture costs"; Fourth Annual Conference on Carbon Capture and Sequestration DOE/ NETL, May 2 - 5 2005.

However, in a typical configuration in a thermal power plant the heat delivered from vapour recompression is insufficient for the total reboiler requirement. As can be seen in Figure 2 the system still requires some LP steam to make up the deficiency.

In accordance with the invention in a first aspect there is provided an apparatus for the regeneration of an aqueous amine absorption solution rich in captured CO₂ the recovery of captured CO₂ therefrom in accordance with the claims appended hereto.
The apparatus of the invention is thus an apparatus for the regeneration of aqueous amine absorption solution, most of the features of which will be familiar from the prior art.

As will be understood, the apparatus of the invention comprises an apparatus for the regeneration of capture medium comprising aqueous amine absorption solution by removal of a target gas species comprising CO₂ previously associated therewith, for example having been previously associated therewith in a suitable capture apparatus in which a gas phase containing the target gas has been caused to flow through the capture medium. The capture medium is an aqueous amine absorption solution suitable for that purpose, in particular to tend to associate at a first, lower process temperature and dissociate at a second, higher process temperature. The aqueous amine absorption solution may thus be regenerated to recover captured CO₂ by heating.

The capture medium is for example an absorption solution from a wet scrubber. Many of the features of such systems will be familiar from the prior art. The invention is discussed below applied to a system for an absorption solution.

In such a case the containment structure defines a process volume which is for example an elongate column, for example disposed vertically. A solution comprising aqueous amine absorption solution which is rich in absorbed CO₂ target gas, for example from a suitable absorption column, is passed into the volume, for example towards the top of the regeneration column. The column preferably contains high surface area separation structures. Solution passing out of the volume, for example at the bottom of the column is, subject to a repeatedly cycled heating and for example reboiling process by the heating means in a manner which will be familiar. Thus, the heating means comprises a reboiler such as a condensing reboiler.

The result of this process is to cause the absorbed CO₂ gas to tend to dissociate from the solution, and to result in the production of an absorbed CO₂ rich vapour phase (for example further including water vapour, and solution vapour) which can be drawn from the process volume for example at the top of the column, and a lean regenerated solution which can be removed for reuse in an absorption system. Such an arrangement will be generally familiar from the prior art.

The invention is distinctly characterised in the two sources of thermal energy which are used to provide energy, and in the particular preferred case substantially all of the energy, necessary to drive the reboiler heating means.

First, the vapour stream rich in recovered formerly absorbed CO₂ gas is subject to compression in a vapour recompression apparatus comprising one or more compressors. The heat recovered by this process is delivered to the reboiler to supply some of its thermal energy requirement.

Such an arrangement alone is known. However, it is insufficient to meet the entire requirement of a typical reboiler. In prior art systems, a vapour recompression method can reduce the amount of LP steam required to provide energy for the reboiler, but cannot substitute for it. A substantial amount of LP steam energy is still required.

The present invention is distinctly characterised in that use is additionally made of cold reheat (CRH) steam in substitution, at least in part, for the residual LP steam. As will be well understood in the art, cold reheat steam comprises exhaust steam from a higher pressure turbine, for example from the HP turbine of a HP/IP/LP system, which is diverted from the reheat stream prior to being reheated to condition for supply to the next turbine in the system. The CRH steam is at higher pressure than the LP exhaust conventionally used, and is passed via a pressure reducing means comprising a means to extract work from and reduce the pressure of the CRH steam. The means to extract work comprises a drive for the vapour compression system in the form of a back pressure turbine disposed to drive the vapour compression system. Thus the CRH steam provides two functions. First, it provides useful mechanical work to drive the vapour recompression process via a back pressure turbine which is used to drive the vapour compression apparatus for example by suitable mechanically linked drive means. Second, the resultant lower pressure steam produced as output is supplied to the reboiler as an additional source of thermal energy.

Making use of the CRH steam in this way to supply at least some, preferably a major part of, and particularly preferably substantially all of, the thermal energy deficit which cannot be supplied by vapour recompression alone substantially reduces, and in the preferred case can essentially obviate, the need to use steam from the LP system at all. This is achieved because of the distinctive combination of both CRH steam and vapour recompression to deliver each stream to the reboiler at appropriate condition.

Advantages of such a dual delivery system include one or more of the following.

There is an ability to balance the input of required heat to the reboiler (i.e. balance the heat input from the vapour recompression and the cold reheat).

The plant may be easier to integrate into the turbine systems of a thermal power facility, for example removing the need for a large pressure maintenance value on the IP/LP cross over or requiring a special LP turbine with a clutch arrangement.

Gas delivered from the process tends to be at a higher elevated pressure (for example 5 bar) so downstream compression power requirements may be reduced.

The apparatus may further comprise a reflux condenser downstream of the reboiler. Since the reflux condenser may be set up to reject heat to the reboiler, the cooling water requirement may be reduced.

The heating means is a condenser reboiler as is familiar. Again as is familiar it is disposed to receive solution that has passed through a process volume, for example via an outlet towards the bottom of a column, and reboil the solution. The invention is distinctly characterised in that the energy for the reboiler is supplied at least in large part both by vapour recompression and from the lower pressure stream derived from CRH steam from the HP turbine system. This may significantly reduce or eliminate the need for a stream from the LP turbine system. Thus, in the preferred case, the regeneration apparatus may be further distinguished by the absence of any steam supply from the LP turbine system, steam supply being limited to CRH steam from the HP turbine system.

The vapour recompression apparatus may comprise a single compressor. Optionally, a plurality of compressors may be provided, for example in series, to compress the vapour. The vapour is compressed for example to 2 to 20 bar or higher if necessary.

The apparatus additionally incorporates a condenser to condense and recover solution vapour from the compressed vapour phase. Conduit means may be provided to feed recovered solution condensed from the vapour phase to any suitable point in the system and for example back into the containment structure.

The apparatus conveniently additionally incorporates a condenser to condense and recover water vapour from the vapour phase. Conduit means may be provided to deliver the recovered water to any suitable point in the system.

The resultant output is a substantially pure CO₂ gas phase, suitable for subsequent storage. In a more complete system, the apparatus may further comprise fluidly in series a conduit to deliver the gas phase produced by the condensing reboiler via optional additional condensing cooling means, for example as above described, optionally via a dehydration apparatus, to a compression system for storage. Where the recovered gas is CO₂, such a system is known to produce greater than 98% purity CO₂ for storage.

The regeneration apparatus is in particular intended for and is preferably adapted for use with an absorption apparatus such as an absorption column suitable for absorbing a CO₂ target gas from a source gas stream into a suitable capture medium comprising an aqueous amine absorption solution, producing a CO₂ rich solution which may then be passed to the regeneration apparatus of the first aspect of the invention for regeneration of aqueous amine absorption solution and recovery of absorbed CO₂ therefrom.

Preferably, at least one regeneration apparatus as above described is provided for use with, and for example in fluid series downstream of, at least one such absorption apparatus.

Thus, in a more complete second aspect of the invention, an apparatus for removal of CO₂ from a source gas stream comprises an absorption apparatus fluidly upstream of a regeneration apparatus in accordance with the first aspect of the invention. The absorption apparatus in particular comprises a means to absorb CO₂ from a source gas stream into a suitable capture medium comprising an aqueous amine absorption solution and for example is a means to countercurrently flow the absorption solution and a source gas stream so as to cause the CO₂ target gas to pass into and be absorbed by the absorption solution. That is to say, the absorption apparatus for example comprises an absorption column or wet scrubber column as will be familiar.

Such an absorption column may for example comprise a containment vessel, and for example a vertical containment vessel, containing multiple sections of structured packaging to maximise the surface area for mass transfer. The gas stream inlet means may be provided, for example towards the bottom of the column, to inlet a gas stream including a target gas. Solution supply means may be provided, for example towards the top of a column, to provide lean absorption solution thereto. The gas stream flows upwards through the column as the absorption solution flows countercurrently downwards. CO₂ is absorbed into the absorption solution and a CO₂ rich absorption solution is drawn off, for example at the bottom of the column. A rich absorption solution outlet is preferably provided for this purpose.

The apparatus preferably comprises a rich absorption solution conduit linking the rich absorption solution outlet to a rich absorption solution inlet of the regeneration apparatus of the first aspect of the invention. The apparatus preferably further comprises a lean absorption solution conduit to pass regenerated lean absorption solution from the regeneration apparatus to an absorption solution inlet of the absorption apparatus. The lean absorption solution conduit may include solution cooling means to cool the regenerated solution from the higher temperature at which it leaves the reboiler to a lower temperature more suitable for the absorption process.

The target gas is CO₂. Absorption solutions comprise aqueous amine solutions of suitable absorbent reagents. Systems for the recovery of CO₂ from a gas stream are well established, and suitable chemistries and absorbent reagents are well known. The solution comprises one or more aqueous amines, for example including but not limited to monoethanolamines or methyl-diethanol-amines.
In a particularly convenient application of the invention, the source gas stream is flue gas from a combustion apparatus for the burning of carbonaceous fuels, such as flue gas from a thermal power plant.

It follows that in a more complete third aspect of the invention, there is provided a thermal power plant comprising a combustion means to burn carbonaceous fuel and generate steam, at least one high pressure (HP) turbine system and at least one low pressure (LP) turbine system, and optionally additional, for example intermediate pressure (IP), turbine system(s); a regeneration apparatus in accordance with the first aspect of the invention or a gas removal apparatus in accordance with the second aspect of the invention including such a regeneration apparatus; conduit means to supply cold reheat steam from a steam exhaust of the HP turbine system of the thermal power plant to the work extraction/ pressure reduction means, for example being the back pressure turbine, of the regeneration apparatus.

The thermal power plant in accordance with this aspect of the invention is distinctly characterised in that a combination of vapour recompression and CRH steam is used to provide thermal energy to the reboiler. This can substitute for the LP steam conventionally used, in the preferred case entirely. Thus, in the preferred case, the power plant may be further distinguished by the absence of any steam supply from the LP turbine system to the regeneration apparatus.

The power plant may optionally additionally comprise a flue gas outlet fluidly connected to supply flue gas directly from the combustion apparatus as a source gas stream to a removal apparatus of the second aspect of the invention.

In accordance with the invention in a fourth aspect there is provided a method of regenerating an aqueous amine absorption solution rich in captured CO₂ and recovery of an absorbed CO₂ therefrom in accordance with the claims appended hereto.

The method in particular comprises passing the CO₂ rich absorption solution through a regeneration apparatus as above described having a condensing heating means comprising a reboiler to heat the CO₂ rich absorbent solution by reboiling, and thereby cause captured CO₂ to dissociate into a gas rich vapour phase; wherein the compressed vapour is used to supply thermal energy to the heating means; and wherein the resultant lower pressure steam is passed to the reboiler as a further source of thermal energy therefor.

Thus, as above described, the cold reheat steam (CRH) is used first as a source of work to drive the recompression process and second as a source of recovered heat to supplement the thermal energy requirement of the reboiler. The requirement to use LP steam can be reduced or eliminated.

Further stages of process will be understood by the description of the foregoing apparatus. In particular the gas regenerated by the foregoing method steps may be then be subject to condensation, for example to remove absorbent liquid vapour and/or water vapour, drying, compression/liquefaction stages, for example to pass on for onward storage.

The target gas for capture is CO₂, which has for example being removed from a combustion gas stream such as a flue gas stream from a thermal power plant.

Thus, in accordance with a fifth aspect of the invention there is provided a method for the removal and recovery of CO₂ from a gas stream which comprises the steps of:
absorbing a target gas from a source gas stream into a suitable aqueous amine absorption solution by passing the source gas stream through lean absorption solution so as to cause a target gas component of the gas stream to be absorbed by the absorbent solution, for example by passing the gas stream through an absorbing apparatus comprising a means to countercurrently flow absorbent solution and gas;
drawing off the resultant CO₂ rich absorption solution;
processing the CO₂ rich absorption solution in accordance with the fourth aspect of the invention.

The gas stream is especially combustion flue gas, for example thermal power plant flue gas, the gas being CO₂ the method being especially in a preferred case a method of removal and recovery for sequestration of CO₂ from a flue gas stream such as a thermal power plant flue gas stream.

Such a method is generally familiar, and the subject of well established techniques, apparatus and chemistries. The distinct feature of the method of the present invention in accordance with all aspects is the use of CRH steam both to drive vapour recompression, and to supplement the thermal energy supplied by vapour recompression at the reboiler to reduce and potentially eliminate the need to use LP steam.

The invention will be now be described by way of example only with reference to Figures 1 to 3 of the accompanying drawings in which:
Figure 1 is a simple schematic of a prior art absorption and regeneration system;
Figure 2 is a simple schematic of an alternative prior art absorption and regeneration system including a vapour recompression capability;
Figure 3 is a simple schematic of an absorption and regeneration system embodying the principles of the invention.

Reference is made first to Figure 1, which is a general schematic of a typical prior art system for the removal of CO₂ from flue gas via absorption, its recovery via regeneration, and its compression for sequestration.

Flue gas is supplied via a flue gas supply conduit 2 and flue gas blower 4 into the lower part of an absorption column 10. The absorption column is of any suitable design, and for example comprises a vessel containing structured packing 6 adapted to maximise surface area for exchange between liquid and gas and absorption of the CO₂ by the absorption liquid. It may contain other structures such as washing structures, demister etc as is conventional.

Solvent is introduced to an upper part of the column, for example from a fresh supply source and/or as lean solvent regenerated from the regeneration part of the system described below, and flows under the action of gravity countercurrently to the rising flue gas within the column. As this flow takes place, CO₂ is absorbed into the solvent in familiar manner.

The scrubbed flue gas progresses upwards through a washing structure, again comprising structured packing through which water is supplied countercurrently via the wash water supply 8, and passes via demister 12 out of the top of the column for onward processing. The CO₂ rich solvent passes to an outlet at the foot of the column and is passed via a suitable conduit through a solvent cooling stage 14 and a lean/rich solvent exchanger 16 and introduced to a regeneration column 20. A make up supply 18 may be added at this point.

As the temperature of the rich solvent is elevated, CO₂ previously absorbed is released. This generates a vapour phase which is rich in CO₂, and which additionally comprises some solvent vapour. The vapour phase is passed through a condenser 22 and condensed solvent vapour returned to the regeneration column 10. The resultant output gas, rich in CO₂, is passed to a compression and dehydration system 24 and the resultant high purity CO₂ product may be processed, for example for sequestration. The lean solvent is circulated through a reboiler 26 which is heated by LP steam from an associated thermal power plant (not shown). The regenerated lean solvent may be returned to the absorption column 10 for reuse.

The system represented in Figure 1 is conventionally known in the art. It represents an effective solution to the problem of removal of CO₂ from flue gases in a thermal power plant, but can be quite energy intensive. The use of LP steam to drive the reboiler can reduce the efficiency of the thermal power plant significantly, perhaps by 15% or more.

An arrangement to mitigate this inefficiency to some extent is illustrated in Figure 2.

The general principles of the system illustrated schematically in Figure 2 upstream of the regeneration column are identical to those of Figure 1 and like reference numerals are used where applicable. The apparatus of Figure 2 differs in the way that the vapour phase removed from the top of the column is further processed. The vapour phase is subject to a vapour recompression 30 and the compressed and consequently heated vapour phase is passed via a condenser reboiler 36 to provide some of the thermal energy required for the reboiling process. The compressed vapour phase is then passed via a condenser to remove solvent vapour which is returned to the regeneration column. The relatively pure CO₂ is then passed on to a further compression and dehydration system 40. However, since the CO₂ is already under higher pressure as a result of the vapour recompression process, the energy required for subsequent compression prior to storage is reduced.

Such a system in known to offer potential increased efficiency. The recovery of energy from the system via the vapour recompression process can significantly reduce the thermal energy required to drive the reboiler. Although electrical energy is required to drive the compression apparatus, this can still represent an appreciable efficiency saving in a typical thermal power plant. Typical energy consumption figures are given on Figures 1 and 2 for example illustrative purposes.

However, in a system such as illustrated in figure 2 only some of the thermal energy required to drive the reboiler is provided by the vapour recompression process. By way of example illustration only, possible thermal energy contributions are suggested on the figure. On the basis of the example figures given, only 64 MWth of the 192 MWth energy input required is provided. The system therefore still requires LP steam to provide the shortfall, albeit in reduced quantities.

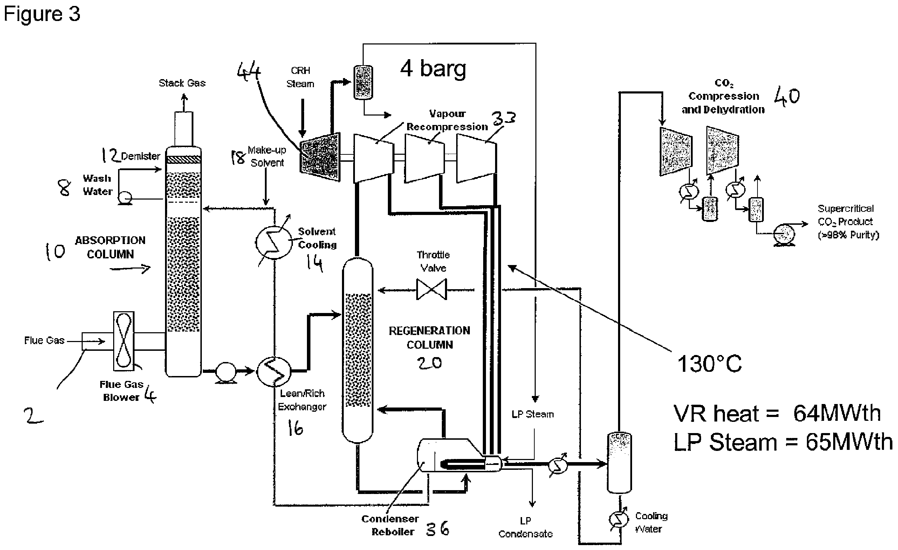

An equivalent system including an example embodiment of the present invention, which reduces and potentially eliminates entirely the need for supply of LP steam from the LP turbine system, is illustrated schematically in Figure 3.

The absorption apparatus upstream of the regeneration column is not pertinent to the invention, may be conventional, and may be the same as that in Figures 1 and 2 and like reference numerals are used where applicable. The invention is characterised in two respects, first in the use of vapour recompression to provide some of the required thermal energy for the condenser reboiler and second in the use of CRH steam from the HP turbine system both to drive the vapour recompression and to provide (as low pressure steam) the additional thermal energy required for the condenser reboiler.

In accordance with the embodiment illustrated in Figure 3, vapour produced by the regeneration process and drawn off from the top of the regeneration column is passed through successive compressors 33. Thermal energy from the compressed vapour is recovered to provide part of the thermal input required by the condenser reboiler 36. In the embodiment the vapour recompression process provides 64 MWth. The compressed vapour is passed through a condenser to remove solvent, which is returned to the regeneration column 20, and the resultant CO₂ rich gas processed by further compression and dehydration in the usual way.

The apparatus is particularly characterised in that it is additionally provided with a supply of CRH steam from the HP turbine system. In the preferred case, as is illustrated in the embodiment, this is in entire substitution for the supply of LP steam required by the system of Figure 2. The CRH steam is passed via a back pressure turbine 44 which is mechanically arranged to drive the array of compression turbines making up the vapour recompression system 33. In addition to providing this driving impulse, the resultant lower pressure output is used as a supply of low pressure steam to the condenser reboiler 36. This lower pressure steam can substitute, at least in part, and preferably entirely, for the low pressure steam from the LP turbine system in the prior art represented by Figures 1 and 2. For example, in the illustrated embodiment, the lower pressure steam supplied in this way contributes 65 MWth energy, making up the shortfall from that provided by the vapour recompression.

Thus, in accordance with the invention the CRH steam supply and the vapour recompression system are integrated in a distinct and innovative way to deliver two heat streams to the reboiler at appropriate condition.

Advantages of such an arrangement may include:
- An ability to balance the required heat to the reboiler
- A PCC plant that avoids many of the problems of integration with the turbine system encountered in conventional arrangements, negating the need for a large pressure maintenance valve on the IP/LP crossover or indeed having a special LP turbine with a clutch arrangement.
- CO₂ delivered from this process is at a higher elevated pressure (5 bara), so further compression power requirements are reduced (in the illustrated embodiment. the first stage of the conventional compression train is removed).
- Since the reflux condenser rejects heat to the reboiler, the need for cooling water is substantially reduced.

## Claims

1. An apparatus for the regeneration of an aqueous amine absorption solution rich in captured CO₂ and the recovery of absorbed CO₂ therefrom comprising:
a containment structure defining a process volume (20);
a supply conduit to pass CO₂ rich absorption solution into the process volume;
condensing heating means (36) comprising a reboiler fluidly connected to the process volume to heat the CO₂ rich absorption solution and thereby cause CO₂ to dissociate from the absorption solution and to form a CO₂ rich vapour phase including solution vapour;
a vapour recompression system (33) fluidly connected to the process volume to receive the CO₂ rich vapour phase output from the process volume and to compress the same;
a compressed vapour supply conduit to supply output compressed vapour to the reboiler (36) as a source of thermal energy therefor;
a condenser to receive the compressed vapour from the reboiler and condense and recover solution vapour from the compressed vapour phase comprising conduit means to feed recovered solution condensed from the vapour phase back into the containment structure and conduit means to output a resultant substantially pure CO₂ gas phase to a compression system (40) for storage;
providing a secondary source of thermal energy for the reboiler (36) comprising, fluidly in series:
a receiving conduit connected to a thermal power plant for receiving cold reheat (CRH) steam from the thermal power plant;
a back pressure turbine (44) disposed to drive the vapour recompression system to extract work from and reduce the pressure of the cold reheat steam;
a delivery conduit to deliver the resultant lower pressure steam to the reboiler (36) as a further source of thermal energy therefor.

2. An apparatus in accordance with any preceding claim further **characterized by** the absence of any steam supply from the LP turbine system, steam supply being limited to CRH steam from the HP turbine system.

3. An apparatus in accordance with any preceding claim wherein the vapour recompression apparatus (33) comprises a plurality of compressors in series.

4. An apparatus in accordance with any preceding claim wherein the vapour recompression apparatus is adapted to compress the vapour to a pressure of 2 to 20 bar.

5. An apparatus in accordance with any preceding claim further comprising a condenser to condense and recover water vapour from the vapour phase.

6. An apparatus in accordance with any preceding claim adapted for use with an absorption apparatus (10) suitable for absorbing CO₂ from a source gas stream into an aqueous amine absorption solution, producing a CO₂ rich absorption solution which may then be passed to the regeneration apparatus for regeneration of absorption solution and recovery of absorbed CO₂ therefrom.

7. An apparatus for removal of CO₂ from a source gas stream comprising an absorption apparatus (10) fluidly upstream of a regeneration apparatus in accordance with any of claims 1 to 5.

8. An apparatus in accordance with claim 7 wherein the absorption apparatus comprises a means to absorb CO₂ from a source gas stream (2) into an aqueous amine absorption solution.

9. An apparatus in accordance with claim 8 wherein the absorption apparatus comprises a means to countercurrently flow the absorption solution and the source gas stream so as to cause CO₂ to pass into and be absorbed by the absorption solution.

10. An apparatus in accordance with one of claims 7 to 9 wherein the source gas stream (2) is flue gas from a combustion apparatus for the burning of carbonaceous fuels, such as flue gas from a thermal power plant.

11. A thermal power plant comprising a combustion means to burn carbonaceous fuel and generate steam, at least one high pressure (HP) turbine system and at least one low pressure (LP) turbine system; a regeneration apparatus in accordance with one of claims 1 to 6 or a gas removal apparatus in accordance with the one of claims 7 to 10 including such a regeneration apparatus; conduit means to supply cold reheat steam from a steam exhaust of the HP turbine system to the work extraction means of the regeneration apparatus.

12. A thermal power plant in accordance with claim 11 comprising a gas removal apparatus in accordance with one of claims 7 to 10 and a flue gas outlet fluidly connected to supply flue gas directly from the combustion apparatus as a source gas stream to the removal apparatus.

13. A method of regeneration of an aqueous amine absorption solution rich in captured CO₂ and recovery of captured CO₂ therefrom comprising the steps of:
heating a CO₂ rich absorption solution and thereby causing captured CO₂ to dissociate from the absorption solution and to form a CO₂ rich vapour phase including solution vapour;
compressing the CO₂ rich vapour phase and using the compressed gas rich vapour phase as a first source of thermal energy delivered to a reboiler for heating the CO₂ rich absorption solution therein;
then passing the compressed vapour phase to a condenser to condense and recover solution vapour from the compressed vapour phase, feeding recovered solution condensed from the vapour phase back into the containment structure, and delivering a resultant substantially pure CO₂ gas phase to a compression system (40) for storage;
additionally taking a supply of cold reheat (CRH) steam from a steam exhaust of a thermal power plant, extracting work therefrom by passing the cold reheat steam through a back pressure turbine so as to drive a compressor to compress the said CO₂ rich vapour phase and reducing the pressure of the CRH steam, and delivering the resultant lower pressure steam to the reboiler (36) as a further source of thermal energy for heating the CO₂ rich absorption solution therein.

14. A method in accordance with claim 13 comprising passing the CO₂ rich absorption solution through a regeneration apparatus (10) in accordance with one of claims 1 to 6.

15. A method for the removal and recovery of CO₂ from a gas stream which comprises the steps of:
absorbing CO₂ from a source gas stream into an aqueous amine absorption solution by passing the source gas stream through lean absorption solution so as to cause a CO₂ gas component of the gas stream to be absorbed by the absorbent solution ,
drawing off the resultant CO₂ rich absorption solution;
processing the CO₂ rich absorption solution in accordance with the method of one of claims 13 to 14.

16. A method of removal and recovery for sequestration of CO₂ from a flue gas stream such as a thermal power plant flue gas stream comprising the method of claim 15 performed on a source gas stream comprising such a flue gas.

## Patentansprüche

1. Eine Vorrichtung für die Regeneration einer wässrigen Aminabsorptionslösung, die reich an eingefangenem CO₂ ist, und die Wiedergewinnung von absorbiertem CO₂ daraus, beinhaltend:
eine Einschlussstruktur, die ein Prozessvolumen (20) definiert;
eine Zufuhrleitung, um an CO₂ reiche Absorptionslösung in das Prozessvolumen zu leiten;
ein Kondensationserwärmungsmittel (36), beinhaltend einen Verdampfer, das mit dem Prozessvolumen fluidisch verbunden ist, um die an CO₂ reiche Absorptionslösung zu erwärmen und dadurch zu verursachen, dass sich CO₂ aus der Absorptionslösung abspaltet, und um eine Lösungsdampf umfassende, an CO₂ reiche Dampfphase zu bilden;
ein Dampfrekompressionssystem (33), das mit dem Prozessvolumen fluidisch verbunden ist, um die an CO₂ reiche Dampfphasenausgabe aus dem Prozessvolumen zu empfangen und um sie zu komprimieren;
eine Zufuhrleitung für komprimierten Dampf zum Zuführen von komprimiertem Ausgabedampf zu dem Verdampfer (36) als eine Quelle von Wärmeenergie dafür;
ein Kondensator zum Empfangen des komprimierten Dampfs aus dem Verdampfer und zum Kondensieren und Wiedergewinnen von Lösungsdampf aus der komprimierten Dampfphase, beinhaltend ein Leitungsmittel zum Speisen von aus der Dampfphase kondensierter wiedergewonnener Lösung zurück in die Einschlussstruktur und ein Leitungsmittel zum Ausgeben einer resultierenden, im Wesentlichen reinen CO₂-Gasphase an ein Kompressionssystem (40) zur Speicherung;
Bereitstellen einer sekundären Quelle von Wärmeenergie für den Verdampfer (36), die Folgendes fluidisch in Reihe beinhaltet:
eine Empfangsleitung, die mit einer Wärmekraftanlage verbunden ist, zum Empfangen von kaltem Zwischenwasserdampf (CRH) aus der Wärmekraftanlage;
eine Gegendruckturbine (44), die angeordnet ist, um das Dampfrekompressionssystem zum Extrahieren von Arbeit aus dem kalten Zwischenwasserdampf und Reduzieren des Drucks des kalten Zwischenwasserdampfs anzutreiben;
eine Lieferleitung zum Liefern des resultierenden Wasserdampfs niedrigeren Drucks an den Verdampfer (36) als eine weitere Quelle von Wärmeenergie dafür.

2. Vorrichtung gemäß einem der vorhergehenden Ansprüche, ferner **gekennzeichnet durch** das Fehlen jeglicher Wasserdampfzufuhr aus dem LP-Turbinensystem, wobei Wasserdampfzufuhr auf CRH-Wasserdampf aus dem HP-Turbinensystem beschränkt ist.

3. Vorrichtung gemäß einem der vorhergehenden Ansprüche, wobei die Dampfrekompressionsvorrichtung (33) eine Vielzahl von Kompressoren in Reihe beinhaltet.

4. Vorrichtung gemäß einem der vorhergehenden Ansprüche, wobei die Dampfrekompressionsvorrichtung angepasst ist, um den Dampf auf einen Druck von 2 bis 20 bar zu komprimieren.

5. Vorrichtung gemäß einem der vorhergehenden Ansprüche, ferner beinhaltend einen Kondensator zum Kondensieren und Wiedergewinnen von Nassdampf aus der Dampfphase.

6. Vorrichtung gemäß einem der vorhergehenden Ansprüche, angepasst zur Verwendung mit einer Absorptionsvorrichtung (10), die zum Absorbieren von CO₂ aus einem Quellgasstrom in eine wässrige Aminabsorptionslösung geeignet ist, wobei eine an CO₂ reiche Absorptionslösung produziert wird, die anschließend zur Regeneration der Absorptionslösung und Wiedergewinnung von absorbiertem CO₂ daraus zu der Regenerationsvorrichtung geleitet werden kann.

7. Vorrichtung zur Entfernung von CO₂ aus einem Quellgasstrom, beinhaltend eine Absorptionsvorrichtung (10), die einer Regenerationsvorrichtung gemäß einem der Ansprüche 1 bis 5 fluidisch vorgelagert ist.

8. Vorrichtung gemäß Anspruch 7, wobei die Absorptionsvorrichtung ein Mittel zum Absorbieren von CO₂ aus einem Quellgasstrom (2) in eine wässrige Aminabsorptionslösung beinhaltet.

9. Vorrichtung gemäß Anspruch 8, wobei die Absorptionsvorrichtung ein Mittel zum Fließenlassen der Absorptionslösung und des Quellgasstroms im Gegenstrom beinhaltet, um zu verursachen, dass CO₂ in die Absorptionslösung geleitet und von der Absorptionslösung absorbiert wird.

10. Vorrichtung gemäß einem der Ansprüche 7 bis 9, wobei der Quellgasstrom (2) Rauchgas aus einer Verbrennungsvorrichtung zum Verbrennen von kohlenstoffhaltigen Brennstoffen, wie etwa Rauchgas aus einer Wärmekraftanlage, ist.

11. Eine Wärmekraftanlage, beinhaltend ein Verbrennungsmittel zum Verbrennen kohlenstoffhaltigen Brennstoffs und Erzeugen von Wasserdampf, mindestens ein Hochdruck(HP)-Turbinensystem und mindestens ein Niederdruck(LP)-Turbinensystem; eine Regenerationsvorrichtung gemäß einem der Ansprüche 1 bis 6 oder eine eine solche Regenerationsvorrichtung umfassende Gasentfernungsvorrichtung gemäß einem der Ansprüche 7 bis 10; ein Leitungsmittel zum Zuführen von kaltem Zwischenwasserdampf aus einer Wasserdampfabführung des HP-Turbinensystem zu dem Arbeitsextraktionsmittel der Regenerationsvorrichtung.

12. Wärmekraftanlage gemäß Anspruch 11, beinhaltend eine Gasentfernungsvorrichtung gemäß einem der Ansprüche 7 bis 10 und einen Rauchgasauslass, der fluidisch verbunden ist, um der Entfernungsvorrichtung Rauchgas direkt aus der Verbrennungsvorrichtung als ein Quellgasstrom zuzuführen.

13. Ein Verfahren zur Regeneration einer wässrigen Aminabsorptionslösung, die reich an eingefangenem CO₂ ist, und zur Wiedergewinnung von eingefangenem CO₂ daraus, das die folgenden Schritte beinhaltet:
Erwärmen einer an CO₂ reichen Absorptionslösung und dadurch verursachen, dass sich eingefangenes CO₂ aus der Absorptionslösung abspaltet und eine Lösungsdampf umfassende, an CO₂ reiche Dampfphase bildet;
Komprimieren der an CO₂ reichen Dampfphase und Verwenden der komprimierten, gasreichen Dampfphase als eine erste Quelle von Wärmeenergie, die an einen Verdampfer geliefert wird, um die an CO₂ reiche Absorptionslösung darin zu erwärmen;
anschließend Leiten der komprimierten Dampfphase zu einem Kondensator zum Kondensieren und Wiedergewinnen von Lösungsdampf aus der komprimierten Dampfphase, Speisen der aus der Dampfphase kondensierten wiedergewonnen Lösung zurück in die Einschlussstruktur und Liefern einer resultierenden, im Wesentlichen reinen CO₂-Gasphase an ein Kompressionssystem (40) zur Speicherung;
zusätzlich Nehmen einer Zufuhr von kaltem Zwischenwasserdampf (CRH) aus einer Wasserdampfabführung einer Wärmekraftanlage, Extrahieren von Arbeit daraus durch das Leiten des kalten Zwischenwasserdampfs durch eine Gegendruckturbine, um einen Kompressor anzutreiben, um die an CO₂ reiche Dampfphase zu komprimieren, und Reduzieren des Drucks des CRH-Wasserdampfs und Liefern des resultierenden Wasserdampfs niedrigeren Drucks an den Verdampfer (36) als eine weitere Quelle von Wärmeenergie zum Erwärmen der an CO₂ reichen Absorptionslösung darin.

14. Verfahren gemäß Anspruch 13, beinhaltend das Leiten der an CO₂ reichen Absorptionslösung durch eine Regenerationsvorrichtung (10) gemäß einem der Ansprüche 1 bis 6.

15. Ein Verfahren zur Entfernung und Wiedergewinnung von CO₂ aus einem Gasstrom, das die folgenden Schritte beinhaltet:
Absorbieren von CO₂ aus einem Quellgasstrom in eine wässrige Aminabsorptionslösung durch das Leiten des Quellgasstroms durch eine unbeladene Absorptionslösung, um zu verursachen, dass eine CO₂-Gaskomponente des Gasstroms von der absorbierenden Lösung absorbiert wird, Abziehen der resultierenden, an CO₂ reichen Absorptionslösung;
Verarbeiten der an CO₂ reichen Absorptionslösung gemäß dem Verfahren eines der Ansprüche 13 bis 14.

16. Ein Verfahren zur Entfernung und Wiedergewinnung, zur Sequestrierung von CO₂ aus einem Rauchgasstrom wie etwa einem Wärmekraftanlage-Rauchgasstrom, beinhaltend das Verfahren gemäß Anspruch 15, das an einem ein solches Rauchgas beinhaltenden Quellgasstrom durchgeführt wird.

## Revendications

1. Un appareil pour la régénération d'une solution d'absorption d'amine aqueuse riche en CO₂ capturé et la récupération de CO₂ absorbé à partir de celle-ci, comprenant :
une structure de confinement définissant un volume de processus (20) ;
un conduit d'alimentation pour faire passer la solution d'absorption riche en CO₂ dans le volume de processus ;
des moyens de chauffage à condensation (36) comprenant un rebouilleur raccordé fluidiquement au volume de processus pour chauffer la solution d'absorption riche en CO₂ et pour amener par conséquent le CO₂ à se dissocier de la solution d'absorption et à former une phase vapeur riche en CO₂ incluant une vapeur de solution ;
un système de recompression de vapeur (33) raccordé fluidiquement au volume de processus pour recevoir la phase vapeur riche en CO₂ produite en sortie à partir du volume de processus et pour comprimer celle-ci ;
un conduit d'alimentation de vapeur comprimée pour fournir la vapeur comprimée produite en sortie au rebouilleur (36) en tant que source d'énergie thermique pour celui-ci ;
un condenseur pour recevoir la vapeur comprimée provenant du rebouilleur et condenser et récupérer la vapeur de solution à partir de la phase vapeur comprimée comprenant un moyen formant conduit pour acheminer la solution récupérée condensée à partir de la phase vapeur en retour dans la structure de confinement et un moyen formant conduit pour produire en sortie une phase gazeuse résultante de CO₂ substantiellement pur vers un système de compression (40) à des fins de stockage ;
procurer une source secondaire d'énergie thermique au rebouilleur (36) comprenant, fluidiquement en série :
un conduit de réception raccordé à une centrale thermique pour recevoir de la vapeur de réchauffage à froid (CRH) provenant de la centrale thermique ;
une turbine à contre-pression (44) disposée pour entraîner le système de recompression de vapeur pour extraire le travail provenant de et réduire la pression de la vapeur de réchauffage à froid ;
un conduit d'amenée pour délivrer la vapeur résultante à pression plus faible au rebouilleur (36) en tant que source supplémentaire d'énergie thermique pour celui-ci.

2. Un appareil conformément à n'importe quelle revendication précédente **caractérisé en outre par** l'absence d'une quelconque alimentation en vapeur provenant du système de turbine LP, l'alimentation en vapeur étant limitée à la vapeur CRH provenant du système de turbine HP.

3. Un appareil conformément à n'importe quelle revendication précédente dans lequel l'appareil de recompression de vapeur (33) comprend une pluralité de compresseurs en série.

4. Un appareil conformément à n'importe quelle revendication précédente dans lequel l'appareil de recompression de vapeur est conçu pour comprimer la vapeur à une pression de 2 à 20 bars.

5. Un appareil conformément à n'importe quelle revendication précédente comprenant en outre un condenseur pour condenser et récupérer la vapeur d'eau à partir de la phase vapeur.

6. Un appareil conformément à n'importe quelle revendication précédente conçu pour une utilisation avec un appareil d'absorption (10) convenant à l'absorption de CO₂ à partir d'un flux de gaz source dans une solution d'absorption d'amine aqueuse, la production d'une solution d'absorption riche en CO₂ qui peut ensuite être passée à l'appareil de régénération pour la régénération de la solution d'absorption et la récupération de CO₂ absorbé à partir de celle-ci.

7. Un appareil pour le retrait de CO₂ à partir d'un flux de gaz source comprenant un appareil d'absorption (10) fluidiquement en amont d'un appareil de régénération conformément à n'importe lesquelles des revendications 1 à 5.

8. Un appareil conformément à la revendication 7 dans lequel l'appareil d'absorption comprend un moyen pour absorber le CO₂ à partir d'un flux de gaz source (2) dans une solution d'absorption d'amine aqueuse.

9. Un appareil conformément à la revendication 8 dans lequel l'appareil d'absorption comprend un moyen pour faire s'écouler à contre-courant la solution d'absorption et le flux de gaz source de sorte à amener le CO₂ à passer dans et à être absorbé par la solution d'absorption.

10. Un appareil conformément à l'une des revendications 7 à 9 dans lequel le flux de gaz source (2) est du gaz de cheminée provenant d'un appareil de combustion destiné à brûler des combustibles carbonés, tel un gaz de cheminée provenant d'une centrale thermique.

11. Une centrale thermique comprenant un moyen de combustion pour brûler un combustible carboné et générer de la vapeur, au moins un système de turbine à haute pression (HP) et au moins un système de turbine à basse pression (LP) ; un appareil de régénération conformément à l'une des revendications 1 à 6 ou un appareil de retrait de gaz conformément à l'une des revendications 7 à 10 incluant un tel appareil de régénération ; un moyen formant conduit pour fournir la vapeur de réchauffage à froid à partir d'une évacuation de vapeur du système de turbine HP jusqu'au moyen d'extraction de travail de l'appareil de régénération.

12. Une centrale thermique conformément à la revendication 11 comprenant un appareil de retrait de gaz conformément à l'une des revendications 7 à 10 et un orifice de sortie de gaz de cheminée raccordé fluidiquement pour fournir le gaz de cheminée directement à partir de l'appareil de combustion en tant que flux de gaz source jusqu'à l'appareil de retrait.

13. Une méthode de régénération d'une solution d'absorption d'amine aqueuse riche en CO₂ capturé et de récupération de CO₂ capturé à partir de celle-ci, comprenant les étapes consistant à :
chauffer une solution d'absorption riche en CO₂ et amener par conséquent le CO₂ capturé à se dissocier de la solution d'absorption et à former une phase vapeur riche en CO₂ incluant une vapeur de solution ;
comprimer la phase vapeur riche en CO₂ et utiliser la phase vapeur riche en gaz comprimé en tant que première source d'énergie thermique délivrée à un rebouilleur pour chauffer la solution d'absorption riche en CO₂ dans celui-ci ;
ensuite faire passer la phase vapeur comprimée à un condenseur pour condenser et récupérer la vapeur de solution à partir de la phase vapeur comprimée, acheminer la solution récupérée condensée à partir de la phase vapeur en retour dans la structure de confinement, et délivrer une phase gazeuse de CO₂ substantiellement pur à un système de compression (40) à des fins de stockage ;
prendre additionnellement une alimentation de vapeur de réchauffage à froid (CRH) à partir d'une évacuation de vapeur d'une centrale thermique, extraire le travail à partir de celle-ci en faisant passer la vapeur de réchauffage à froid à travers une turbine à contre-pression de sorte à entraîner un compresseur pour comprimer ladite phase vapeur riche en CO₂ et réduire la pression de la vapeur CRH, et délivrer la vapeur résultante à pression plus faible au rebouilleur (36) en tant que source supplémentaire d'énergie thermique pour chauffer la solution d'absorption riche en CO₂ dans celui-ci.

14. Une méthode conformément à la revendication 13 comprenant le passage de la solution d'absorption riche en CO₂ à travers un appareil de régénération (10) conformément à l'une des revendications 1 à 6.

15. Une méthode pour le retrait et la récupération de CO₂ à partir d'un flux de gaz qui comprend les étapes consistant à :
absorber le CO₂ provenant d'un flux de gaz source dans une solution d'absorption d'amine aqueuse en faisant passer le flux de gaz source à travers une solution d'absorption pauvre de sorte à amener un composant gazeux CO₂ du flux de gaz à être absorbé par la solution absorbante,
soutirer la solution d'absorption résultante riche en CO₂ ;
traiter la solution d'absorption riche en CO₂ conformément à la méthode de l'une des revendications 13 à 14.

16. Une méthode de retrait et de récupération pour la séquestration de CO₂ provenant d'un flux de gaz de cheminée tel un flux de gaz de cheminée de centrale thermique comprenant la méthode de la revendication 15 réalisée sur un flux de gaz source comprenant un tel gaz de cheminée.
